# DEMANDE DE BREVET EUROPEEN

(11) **EP 0 691 529 A1**
(43) Date de publication de la demande: **10.01.1996**
(21) Numéro de dépôt: 95401591.3
(22) Date de dépôt: 03.07.1995
(51) Int. Cl.: G01G 1/24, G01G 19/24

(54) **Procédé et dispositif de préparation d'un produit issu de l'addition en proportion donnée de plusiers constituants**

(30) Priorité: 07.07.1994 FR 9408394
(71) Demandeur: Hubert, Jean-Louis, F-12000 Rodez (FR)
(72) Inventeur: Hubert, Jean-Louis, F-12000 Rodez (FR)
(74) Mandataire: Ohayon, Joseph

(57) **Abrégé**

L'invention concerne un procédé et dispositif de préparation d'un produit issu de l'addition en proportion donnée de plusieurs constituants.

Le procédé de préparation d'un produit issu de l'addition en proportion donnée de plusieurs constituants, est caractérisé en ce qu'il consiste à mesurer directement les proportions des constituants, sans calculs manuels ou automatiques, dans leur fraction sans dimension par rapport à l'unité, unité dont l'image en mesure est donnée par un capteur (3) sollicité à sa portée utile, en faisant en sorte que cette image soit atteinte pour la quantité totale de préparation à réaliser, par exemple en faisant en sorte que la quantité à préparer dépende de la configuration d'un jeu de leviers (1; 3, 15, 17) constitué entre le support (13) de la préparation et le capteur (3), l'addition de chaque constituant étant effectuée dans la fraction de cette image.

## Description

L'invention concerne un procédé et dispositif de préparation d'un produit issu de l'addition en proportion donnée de plusieurs constituants.

Dans le domaine du dosage, qu'il soit pondéral ou volumétrique, la préparation des produits fait intervenir l'addition de divers constituants dont on connaît la formulation, c'est à dire la proportion de ses divers constituants. Les proportions sont généralement définies par une fraction sans dimension d'une grandeur physique significative ou en sous-multiples d'une unité de base de cette grandeur physique. Le dénominateur ou les sous-multiples caractérisent la précision utile nécessaire pour réaliser le dosage.

Selon l'habitude, on mesure le poids ou le volume de chaque constituant en valeur absolue calculée en multipliant la fraction correspondante de la formulation par la quantité finale à obtenir. C'est ainsi que pour réaliser une préparation pondérale avec une seule balance, on peut mesurer successivement le poids calculé de chaque constituant déterminé par la formulation puis introduire la quantité prélevée dans un contenant individuel. On peut aussi poser le contenant sur la balance et mesurer l'évolution du poids de la préparation à chaque addition des constituants. Le poids indiqué par la balance est donc le poids total des divers constituants introduits dans le contenant. La formulation détermine dans ce cas la proportion cumulée à chaque étape d'addition.

Selon la méthode utilisée, il est donc nécessaire d'effectuer des calculs de conversion, manuels dans le cas de balances simples et communes, ce qui est fastidieux et source d'erreurs, ou d'utiliser des balances électroniques effectuant automatiquement le calcul du cumul des constituants et qui sont onéreuses.

En outre, on utilise des balances conformes à des normes de précision, calibrées et étalonnées, et dont la lecture d'un échelon ***e*** de mesure devra permettre de préparer la formule pour la quantité la plus petite qui devra un jour ou l'autre être réalisée. Or l'échelon de mesure ***e*** est significatif de la précision de la balance sur toute sa portée. En effet, si on mesure un poids ***p*** proche de la portée maximale, la précision de la mesure ***e/p*** de ce poids est bonne, par contre plus le poids mesuré est petit plus la précision de la mesure de ce poids diminue.

Ceci se produit souvent dans le dosage des peintures pour la réparation des carrosseries de voitures où des teintes de base peuvent être additionnées en très petites quantités. C'est ainsi que l'on est amené chez certains fabricants à donner des formulations qui pour 1 000g de préparation demandent quelques grammes de certaines teintes.

Les balances classiques pour cette application, de portée égale à 10kg et de précision égale à 0,1g, sont alors insuffisantes pour peser correctement moins de 15g de constituant (ce qui fait 6/1000e de précision relative pour une pesée au décigramme). Cette impossibilité de réaliser facilement de petites quantités avec précision ou dans des quantités intermédiaires aux valeurs des formulations, conduit à préparer de la peinture en trop par rapport au besoin ou d'en gâcher.

Il est néanmoins possible d'utiliser des balances plus précises, par exemple de précision égale au centigramme et avec une portée réduite. Ces balances sont onéreuses.

L'invention, objet du brevet, permet d'éviter ces inconvénients et propose un procédé de préparation d'un produit issu de l'addition en proportion donnée de plusieurs constituants, caractérisé en ce qu'il consiste à mesurer directement les proportions des constituants, sans calculs manuels ou automatiques, dans leur fraction sans dimension par rapport à l'unité, unité dont l'image en mesure est donnée par un capteur sollicité à sa portée utile, en faisant en sorte que cette image soit atteinte pour la quantité totale de préparation à réaliser, par exemple en faisant en sorte que la quantité à préparer dépende de la configuration d'un jeu de leviers constitué entre le support de la préparation et le capteur, l'addition de chaque constituant étant effectuée dans la fraction de cette image.

Le capteur est avantageusement un capteur de force, adapté audit jeu de leviers.

Le jeu de leviers peut être gradué pour permettre sa modification, précisément en fonction d'une position graduée reconnue ou mesurée par exemple par un capteur de déplacement tel que potentiomètre ou codeur et en correspondance à la quantité de préparation désirée, la modification de sa configuration étant adaptée à chaque utilisation à la portée utile du capteur pour chaque position étalonnée. Ainsi, à une configuration des leviers correspond une quantité de préparation déterminée, une addition de constituant donnée sollicitant ainsi le capteur en fraction de sa portée utile et donc, l'indication du capteur affiche des fractions de la quantité à réaliser. La précision de la mesure réalisée est par conséquent celle de la portée utile du capteur, quelle que soit la quantité à préparer.

Le jeu de leviers dans sa forme la plus simple est un fléau à trois points, comprenant respectivement un point de support du fléau ou de réaction, un point de support de la préparation et un point d'appui du capteur.

Le point d'appui du capteur est avantageusement disposé à l'extrémité du fléau opposée au point support de la préparation relativement au point support principal du fléau.

La configuration du jeu de leviers peut naturellement être modifiée en faisant varier de façon déterminée les dispositions relatives de ces trois points.

Le jeu de leviers est avantageusement un fléau à parallélogramme déformable, conforme au principe appliqué à la balance de type Roberval. Cette disposition permet de s'affranchir des problèmes d'excentration de charges et d'éviter ainsi l'utilisation de capteurs complexes intégrant les moments de torsion induits par l'excentration des charges.

Le capteur, disposé à l'opposé du point de support de la préparation relativement au point de réaction, peut être constitué par une lame de flexion pure à jauge de contrainte (peu coûteuse et de bonne précision) sollicitée perpendiculairement au fléau ; il est monté coulissant sur le fléau par exemple au moyen d'un dispositif de guidage support le déplaçant parallèlement au fléau, de façon centrée et perpendiculairement à celui-ci, en position horizontale d'équilibre. Ce dispositif de guidage peut être constitué par un coulisseau porte-capteur pourvu de douilles à billes ou de paliers lisses glissant sur deux barres cylindriques support graduées, parallèles au fléau et horizontales. Ainsi, sur la course du porte-coulisseau, il n'existe qu'une seule position du capteur correspondant à sa portée utile et au poids de préparation à obtenir.

L'invention concerne également le dispositif pour la mise en oeuvre du procédé défini précédemment.

Des exemples de réalisation de l'invention sont à présent décrits en référence aux dessins annexés sur lesquels :
- la figure 1 est une vue schématique d'un dispositif simplifié de dosage selon l'invention et
- les figures 2, 3, et 4 sont des vues schématiques de variantes de réalisation.

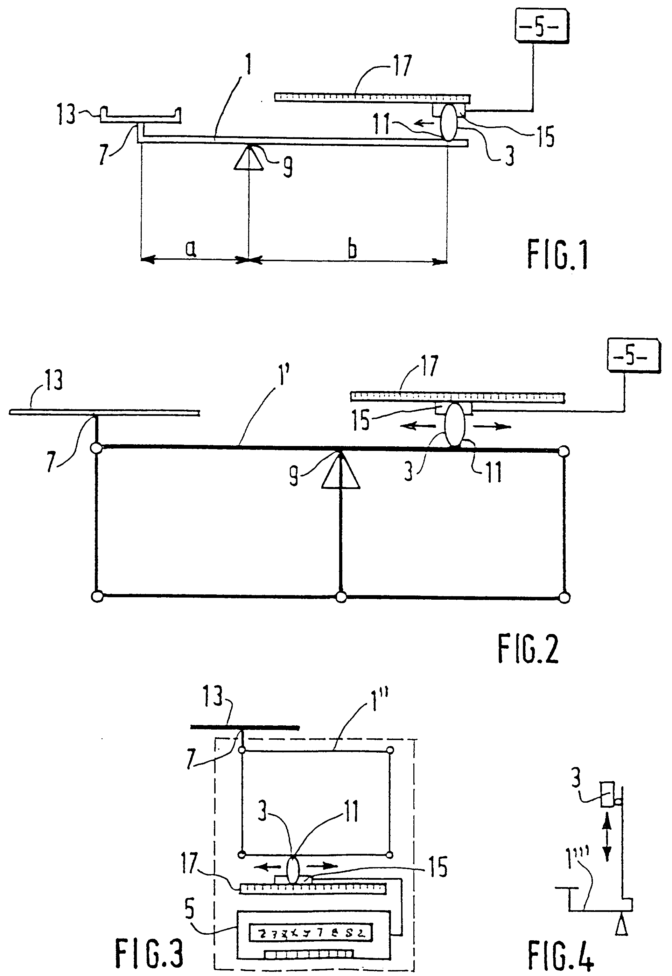

Le dispositif de dosage représenté à la figure 1 comporte essentiellement un fléau de balance simple 1 à trois points, un dispositif de capteur de force 3, un socle support non représenté et une unité de calcul et d'affichage 5 des données numériques de dosage issues du capteur. Le fléau, qui constitue le jeu de leviers précité, comporte trois points d'application des forces, respectivement un point de support 7 de la préparation à effectuer, un point d'appui 9 du fléau sur sa partie médiane et un point d'appui 11 du capteur de force à l'extrémité du fléau opposée au point support de la préparation relativement au point d'appui du fléau. Ainsi, une partie du fléau reçoit le plateau 13 sur lequel on effectue les préparations. L'autre partie du fléau, opposée à la précédente relativement au point d'appui du fléau, présente une surface supérieure plane et rectiligne au contact du capteur de force 3. Celui-ci est monté coulissant parallèlement au fléau 1 grâce à un guidage rectiligne (selon flèche) obtenu par un coulisseau porte-capteur 15. Ce coulisseau est équipé de douilles à billes ou paliers lisses et glisse sur deux barres cylindriques support 17 parallèles au fléau et solidaires du socle. On obtient sur le capteur une force de réaction perpendiculaire au point de contact 11 du fléau et parfaitement centrée. Le capteur est constitué par une lame de flexion pure équipée d'un système à jauge de contrainte relié à l'unité de calcul et d'affichage 5.

Les barres 17 de guidage du capteur sont graduées de manière à déterminer précisément le positionnement du capteur, celui-ci étant reconnu dans chaque position par l'unité de calcul et d'affichage.

Le traitement de l'affichage, fonction du positionnement du capteur, pour une portée donnée, est réalisé de façon classique à l'aide d'un circuit de numérisation du signal du capteur, numérisation filtrée et calibrée à l'aide d'un microcontrôleur qui définit ensuite les paramètres d'affichage selon l'état des entrées des sélecteurs de modes de fonctionnement : réglage de position (du capteur), tarage de l'équilibre au départ, mesure des proportions, et mode pesage eventuellement, décrit ci-après.

Le fonctionnement du dispositif de dosage selon l'invention est à présent expliqué. Pour un poids donné de préparation à réaliser, il n'existe qu'une seule position du capteur 3 où celui-ci travaille à sa portée maximale. Cette position est obtenue en raison de la configuration du jeu de leviers (ensemble du fléau avec la prise de force du capteur à une position donnée) dans un rapport de mesure linéaire (dans cette configuration du jeu de leviers), et la course de translation du capteur est graduée de façon linéaire avec des graduations séparées par des intervalles réguliers et constants en poids de préparation à obtenir avec des unités multiples et sous-multiples (comme par exemple kg,...,g, 0,1g). L'étalonnage des graduations est effectué grâce à l'établissement de 2 points de la droite de la courbe de mesure du calibrage. La course de déplacement du capteur peut être mesurée, par lecture directe des graduations ou l'établissement d'un signal délivré par un capteur de déplacement par exemple analogique avec un potentiomètre ou numérique avec un codeur. Sur l'indicateur, on affiche la mesure de la réaction sur le capteur : après tarage au zéro pour tenir compte de la mesure à vide, cette réaction croît au fur et à mesure que l'on additionne les constituants, et le cumul de leur poids est affiché directement en proportion de la portée maximale fixée. Si, par exemple, on a étalonné arbitrairement l'affichage à 10 000 pour le signal délivré par le capteur à sa portée utile retenue (capteur 10 000 points), on aura donc affiché le cumul des dix-millièmes des divers constituants additionnés et atteint 10 000 en fin de préparation, pour la quantité indiquée à la position du capteur. On pourra ainsi préparer n'importe quelle quantité de préparation et à chaque fois sur la portée utile du capteur. En adoptant ce procédé pour l'élaboration de teintes de couleurs déterminées de peinture dans un atelier de carrosserie, on voit que l'on peut indifféremment préparer 100g de peinture ou 10kg de peinture au 1/10 000° selon la position donnée au capteur 10 000 points. Cette précision est indépendante de la quantité pesée contrairement aux balances traditionnelles. En effet, pour une balance traditionnelle équipée d'un capteur d'une portée de 10kg et qui dispose de 100 000 échelons de mesure, et mesure le décigramme, si l'on doit peser 1g avec cette balance pour une préparation de 100g, on ne connaîtra le poids de 1g qu'avec la précision du décigramme, soit au 1/10°. Le dispositif selon l'invention permet en déplaçant un capteur de 10 000 points, de mettre celui-ci à l'endroit où la réaction pour 100g sera de 10kg, qui est la portée utile totale du capteur. Le poids de 1g de l'exemple précédent sera défini comme 100/10 000 soit à une précision de 1/100° et donc avec dix fois plus de précision que la balance traditionnelle pourtant équipée d'un dispositif de 100 000 échelons et donc dix fois plus précis.

Le dispositif selon l'invention reste constant en précision indépendamment de la diminution du poids de préparation à réaliser, tandis que pour une balance traditionnelle à 100 000 échelons et de 10kg de portée, à partir du poids de 1kg de l'exemple retenu, la précision chutera considérablement. Un capteur 10 000 points selon l'invention permet ainsi d'être plus précis qu'une balance 100 000 points de portée 10kg à partir de moins de 1kg de pesée.

Dans un perfectionnement de l'invention et pour éviter d'avoir à lire des graduations lors du réglage des bras du jeu de leviers, ce qui est un procédé économique mais peu ergonomique, on détermine la configuration des bras de levier avec un potentiomètre ou un codeur analogique.

Dans un autre perfectionnement, on détermine par construction une précharge calibrée qui crée à vide une réaction sur le capteur, mise a profit avant de commencer la préparation. Cette réaction dépend de la configuration des bras du jeu de leviers, dans un rapport de mesure linéaire déterminé, fonction de la configuration du jeu de leviers ; ceci permet d'afficher la quantité de préparation que l'on obtiendra dans chaque position connaissant le signal du capteur à vide. Cette précharge peut être constituée par la masse (étalonnée) du plateau support 13 de la préparation.

Dans un mode opératoire pratique, dès l'initialisation qui précède la réalisation de la préparation, on affiche le signal à vide converti en quantités à réaliser. Ceci permet de régler la configuration du jeu de leviers (positionne le capteur) pour amener l'affichage à la quantité voulue. Une nouvelle sollicitation de la commande d'initialisation permet automatiquement de tarer et de passer en mode mesure.

Dans une variante de fonctionnement de ce dispositif, on peut l'utiliser comme balance à portées multiples. Il faut pour cela utiliser une masse prédéterminée de calibration, qui rajoutée à la précharge calibrée permet de connaître deux points étalonnés de la droite de mesure des poids (le capteur étant supposé linéaire). On traitera l'affichage indicateur de la mesure en conséquence. Cette balance peut ainsi effectuer avec la précision de sa portée utile des pesées de petites quantités aussi bien que des pesées de grandes quantités.

On peut ainsi avoir les deux modes de mesure sur le même instrument avec un sélecteur de fonctions adapté. La quantité à préparer peut être automatiquement affichée par réglage du capteur au départ d'une préparation, et le passage en mode dosage obtenu simultanément avec la touche d'initialisation qui commande simultanément le tarage et le passage à la phase de préparation.

Des techniques classiques et connues permettent de rentrer en exploitation logicielle informatique le traitement des données du capteur et l'affichage de mesure correspondant, sur des configurations du type "P.C." traditionnel ou autres et d'utiliser le potentiel d'analyse et d'affichage que donnent ces configurations sans que l'on puisse considérer pour autant qu'il s'agisse d'un perfectionnement de l'invention.

On notera par ailleurs que l'invention n'est pas limitée au seul déplacement du capteur de force. Les autres points du fléau peuvent également être mobiles. Ainsi, le jeu de leviers, déterminé par les distances des bras de levier ***a*** et ***b*** peut être modifié soit en déplaçant le capteur, les autres points restant fixes (selon l'exemple décrit), soit en déplaçant le point d'appui du fléau, les autres points restant fixes ou en combinant les déplacements des trois points. L'analyse mathématique montre que l'on introduit un rapport de mesure qui sera linéaire ou hyperbolique selon le cas retenu :
***x = a/b*** dans l'exemple décrit
***x = a/a+b*** ou ***x = a + b/a*** respectivement, correspondant aux autres possibilités de modification de déplacement des points du levier.

La figure 2 décrit une variante de réalisation où le fléau est constitué par un parallélogramme articulé 1' selon le principe de la balance dite de Roberval. Cette disposition simple permet de s'affranchir des moments induits par l'excentration de charge. Elle évite l'utilisation de capteurs encombrants, complexes et onéreux intégrant les données relatives aux moments d'excentration des charges.

Comme représenté selon la variante de la figure 3, au lieu de mesurer des efforts sur un fléau longitudinal, dans une position d'équilibre horizontale comme dans les cas précédents, on notera que les efforts peuvent être renvoyés verticalement, par exemple sur une biellette inférieure horizontale d'un parallélogramme articulé 1'', avec translation horizontale du capteur. Cette disposition permet de loger les composants du dispositif doseur dans un volume réduit développé verticalement et, par exemple, comme représenté en trait interrompu.

Le fléau peut également être à développement vertical, tel que désigné par 1'' en figure 4, avec un pli vertical après le point de réaction, le capteur se déplaçant verticalement sur ce pli.

## Revendications

1. Procédé de préparation d'un produit issu de l'addition en proportion donnée de plusieurs constituants, caractérisé en ce qu'il consiste à mesurer directement les proportions des constituants, sans calculs manuels ou automatiques, dans leur fraction sans dimension par rapport à l'unité, unité dont l'image en mesure est donnée par un capteur (3) sollicité à sa portée utile, en faisant en sorte que cette image soit atteinte pour la quantité totale de préparation à réaliser, par exemple en faisant en sorte que la quantité à préparer dépende de la configuration d'un jeu de leviers (1; 3, 15, 17) constitué entre le support (13) de la préparation et le capteur (3), l'addition de chaque constituant étant effectuée dans la fraction de cette image.

2. Procédé selon la revendication 1, caractérisé en ce que ledit capteur (3) est un capteur de force adapté audit jeu de leviers (1; 3, 15, 17).

3. Procédé selon la revendication 1 ou 2, caractérisé en ce que le jeu de leviers (1; 3, 15, 17) est gradué pour permettre sa modification, précisément en fonction d'une position graduée reconnue et en correspondance à la quantité désirée, la modification de configuration étant adaptée à chaque utilisation à la portée utile du capteur (3) pour chaque position étalonnée, afin qu'à une configuration des leviers corresponde une quantité de préparation, une addition de constituant sollicitant le capteur (3) en fraction de sa portée utile, de manière que l'indicateur (5) du capteur affiche des fractions de la quantité de préparation à réaliser, prédéterminée par la configuration du jeu de leviers.

4. Procédé selon l'une des revendications 1 à 3, caractérisé en ce que le jeu de leviers est un fléau (1, 1'') à trois points, comprenant respectivement un point de support du fléau ou de réaction (9), un point de support de la préparation (7) et un point d'appui du capteur (11).

5. Procédé selon l'une des revendications précédentes, caractérisé en ce que le jeu de leviers est un fléau (1'') à parallélogramme articulé déformable, conforme à la balance de type Roberval.

6. Procédé selon l'une des revendications précédentes, caractérisé en ce que le capteur (3) est disposé à l'opposé du point de support de la préparation (7) relativement au point d'appui du fléau (9) (point de réaction).

7. Procédé selon l'une des revendications précédentes, caractérisé en ce que le capteur (3) est une lame de flexion à jauge de contrainte sollicitée perpendiculairement au fléau (1, 1', 1'') en équilibre horizontal.

8. Procédé selon l'une des revendications précédentes, caractérisé en ce que le capteur (3) est monté coulissant relativement au fléau (1, 1', 1'') par exemple au moyen d'un dispositif de guidage support (15, 17) le déplaçant parallèlement au fléau, de façon centrée et perpendiculairement à celui-ci en position horizontale.

9. Procédé selon la revendication 8, caractérisé en ce que ledit dispositif de guidage support est constitué par un coulisseau porte-capteur (15) pourvu de douilles à billes ou paliers lisses glissant sur deux barres cylindriques graduées (17) parallèles au fléau et en position horizontale.

10. Procédé selon l'une des revendications précédentes, caractérisé en ce que pour éviter d'avoir à lire des graduations lors du réglage des bras du jeu de leviers, ce qui est un procédé économique mais peu ergonomique, on détermine par construction une précharge calibrée qui crée à vide une réaction sur le capteur (3) mise a profit avant de commencer la préparation, cette réaction dépendant de la configuration des bras du jeu de leviers dans un rapport de mesure déterminé (linéaire par exemple), ce qui permet d'afficher la quantité de préparation que l'on obtiendra dans chaque position connaissant le signal du capteur à vide, cette précharge étant par exemple constituée par la masse du plateau (13) support de la préparation.

11. Procédé selon l'une des revendications précédentes, caractérisé en ce que l'on utilise un capteur de déplacement du capteur de force à signal analogique ou numérique pour positionner automatiquement ou manuellement ce dernier en fonction du signal de charge affiché à obtenir.

12. Procédé selon l'une des revendications précédentes, caractérisé en ce que selon un mode opératoire pratique, dès l'initialisation qui précède la réalisation d'une préparation, on affiche le signal à vide converti en quantités à réaliser, ceci permet de régler la configuration du jeu de leviers pour amener l'affichage à la quantité voulue et en ce qu'une nouvelle sollicitation de la commande d'initialisation permet automatiquement de tarer et de passer en mode mesure.

13. Procédé selon l'une des revendications précédentes, caractérisé en ce que le dispositif est utilisé comme balance à portées multiples, avec une masse prédéterminée de calibration, qui rajoutée à ladite précharge calibrée permet de connaître deux points étalonnés de la droite de mesure des poids (le capteur (3) étant supposé linéaire).

14. Procédé selon l'une des revendications précédentes, caractérisé en ce que les points du fléau (7, 9, 11) sont mobiles l'un relativement à l'autre.

15. Procédé selon l'une des revendications précédentes, caractérisé en que en vue de loger les composants du dispositif dans un volume réduit, les efforts du jeu de leviers (fléau 1'' et 1''') sont reçus au moyen d'un dispositif de renvoi vertical.

16. Dispositif pour la mise en oeuvre du procédé défini dans l'une des revendications précédentes, caractérisé en ce qu'il comporte un fléau (1, 1', 1'', 1'''), un capteur de force (3) relié au fléau, un indicateur de charge (5), relié au capteur, une partie du fléau recevant le plateau (13) sur lequel on effectue les préparations, l'autre partie du fléau opposée à la précédente relativement au point d'appui du fléau présentant en partie supérieure une surface plane et rectiligne au contact du capteur de force, lequel est monté coulissant parallèlement au fléau grâce à un dispositif de guidage rectiligne formé, par exemple, par un coulisseau porte-capteur (15) équipé de douilles à billes glissant sur deux barres cylindriques (17) parallèles au fléau et solidaires du socle du dispositif, la course de translation du capteur étant graduée en poids de préparation à obtenir avec les unités multiples et sous-multiples adéquates avec deux étalonnages qui donnent deux points de la courbe de mesure (droite de mesure pour un rapport de mesure linéaire), l'indicateur (5) affichant la mesure de la réaction sur le capteur, après tarage au zéro, en proportion de la portée utile du capteur déterminée par sa position sur ledit dispositif de guidage.
